Europäisches Patentamt

European Patent Office

Office européen des brevets

(19)

(11) Numéro de publication : **0 053 971**
**B1**

(12) **FASCICULE DE BREVET EUROPÉEN**

(45) Date de publication du fascicule du brevet :
**15.08.84**

(21) Numéro de dépôt : **81401893.3**

(22) Date de dépôt : **30.11.81**

(51) Int. Cl.³ : **C 22 B 58/00**, C 01 G 15/00,
C 22 B 3/00

(54) Procédé de purification d'une solution de gallium par extraction liquide-liquide.

(30) Priorité : 05.12.80 FR 8025830
05.12.80 FR 8025831

(43) Date de publication de la demande :
16.06.82 Bulletin 82/24

(45) Mention de la délivrance du brevet :
15.08.84 Bulletin 84/33

(84) Etats contractants désignés :
AT BE CH DE FR GB IT LI LU NL SE

(56) Documents cités :
EP-A- 0 021 990
FR-A- 1 289 666
FR-A- 1 577 378
FR-A- 2 270 333
FR-A- 2 438 096
CHEMICAL ABSTRACTS, volume 84, no. 8, 23 février
1976, page 676, abrégé 53475z COLUMBUS OHIO
(US)
CHEMICAL ABSTRACTS, volume 84, 1976, page 234,
abrégé 63054a COLUMBUS OHIO (US)
CHEMICAL ABSTRACTS, volume 80, 1974, page 323,
abrégé 87881m COLUMBUS OHIO (US)
CHEMICAL ABSTRACTS, volume 88, 1978, page 168,
abrégé 172979j COLUMBUS OHIO (US)
Anal. Chem.(1976),48/1,pages 62-64

(73) Titulaire : **RHONE-POULENC SPECIALITES CHIMI-
QUES**
**"Les Miroirs" 18, Avenue d'Alsace**
**F-92400 Courbevoie (FR)**

(72) Inventeur : **Helgorsky, Jacques**
**21, rue de la République**
**F-95740 Frepillon (FR)**
Inventeur : **Leveque, Alain**
**8-10, rue Manin**
**F-75019 Paris (FR)**
Inventeur : **Triollier Michel**
**22, rue du Général Guillomat**
**F-1700 La Rochelle (FR)**

(74) Mandataire : **Dutruc-Rosset, Marie-Claude et al**
**RHONE POULENC RECHERCHES Service Brevets**
**Chimie et Polymères 25, Quai Paul Doumer**
**F-92408 Courbevoie Cedex (FR)**

Jouve, 18, rue St-Denis, 75001 Paris, France

## Description

La présente invention concerne un procédé de purification d'une solution de gallium en vue d'obtenir des solutions de chlorure de gallium de très haute pureté.

Elle a trait plus particulièrement à un procédé de purification de solutions aqueuses chlorhydriques de gallium contenant divers éléments et en particulier du fer à l'état ferrique, par extraction liquide-liquide à l'aide de sels d'ammonium quaternaires ou d'alcools.

Les diverses applications du gallium, notamment dans le domaine de l'électronique nécessitent d'obtenir celui-ci à des degrés de pureté très grands. Il est connu d'opérer la séparation du gallium de certains cations métalliques à l'aide d'amines tertiaires ; cependant, la séparation du gallium de divers éléments et en particulier du fer à l'état ferrique ne s'avérait jusqu'à présent pas possible sans réduction préalable de celui-ci à l'état ferreux (Chemical Abstracts Vol. 92 (1979) 9435c). Dans un procédé de séparation du gallium III, de l'indium III et du thallium III à l'aide de méthyl-4 pentanol-2, il est également préconisé afin d'éviter l'interférence du fer III, de le réduire à l'aide d'acide ascorbique (S. B. GAWALI et al. — Analytical Chemistry 1976, *48*, p. 62-64).

Par ailleurs, on sait, d'après le résumé Chemical Abstracts *80*, 87881 (1974), que les coefficients d'extraction du gallium et du fer III par le décanol augmente quand la concentration en acide chlorhydrique augmente tandis que Al, Zn, Cu et Fe II ne sont pas extraits.

La demanderesse, surmontant le préjugé technique selon lequel notamment la séparation du gallium et du fer à l'état ferrique par extraction à l'aide de solvants est très difficile dans le cas du gallium de très haute pureté, a mis au point un procédé de purification des solutions de gallium qui permet d'obtenir une excellente purification de celle-ci dans les divers éléments et en particulier en fer à l'état ferrique. Ce procédé opère l'extraction sélective du gallium de la solution contenant les divers éléments et en particulier le fer à l'état ferrique à l'aide de sels d'ammonium quaternaires ou d'alcools comme agent d'extraction.

La présente invention concerne un procédé de purification d'une solution aqueuse chlorhydrique de gallium contenant entre autres du fer ferrique par extraction liquide-liquide à l'aide d'un agent d'ectraction caractérisé en ce que :

— on met en contact la solution aqueuse chlorhydrique de gallium ayant une acidité libre comprise entre 1 et 8N avec une phase organique contenant un agent d'extraction choisi parmi les chlorures d'ammonium quaternaire et les alcools ayant au maximum 10 atomes de carbone,

— on sépare la phase organique obtenue contenant le gallium et l'agent d'extraction de la phase aqueuse contenant les impuretés,

— on réalise une opération de lavage de la phase organique séparée pour éliminer les impuretés restantes qui est conduite (i) à l'aide d'une solution chlorhydrique de gallium présentant une acidité comprise entre 5 et 8N lorsque l'agent d'extraction est un chlorure d'ammonium quaternaire et (ii) à l'aide de l'eau ou d'une solution d'acide chlorhydrique inférieure à 6N lorsque l'agent d'extraction est un alcool.

— on transfère le gallium de la phase organique obtenue dans une phase aqueuse par mise en contact de la phase organique avec de l'eau,

— on récupère par séparation la phase aqueuse contenant le chlorure de gallium purifié.

Selon le procédé de la présente invention, on met en contact la solution aqueuse chlorhydrique de gallium avec une phase organique contenant comme agent d'extraction un chlorure d'ammonium quaternaire en solution dans un diluant, ou un alcool ayant au maximum 10 atomes de carbone, de façon à ce que le gallium soit extrait sélectivement dans la phase organique.

Les solutions aqueuses chlorhydriques de gallium que l'on peut purifier selon le procédé de l'invention, en vue d'obtenir des solutions de très grande pureté, peuvent être d'origine très diverses. Elles présentent une acidité libre en HCl comprise de préférence entre 2 et 6N. Elles peuvent également contenir des mélanges d'acide chlorhydrique et d'autres acides tels que, par exemple, l'acide sulfurique ou l'acide perchlorique.

Les impuretés contenues dans ces solutions peuvent être très variées en nature et en quantité, celles-ci peuvent être constituées par les divers cations métalliques de la classification périodique des éléments et notamment ceux de calcium, magnésium, aluminium, vanadium, chrome, cuivre, manganèse, sodium, zinc, cobalt, nickel, plomb, cadmium, indium, barium, strontium, potassium, titane, lanthanides, yttrium, arsenic, fer (à l'état ferrique en particulier), phosphore, étain, bore, etc...

Par ailleurs, la concentration en gallium dans ces solutions peut varier dans de très larges limites et, à titre purement indicatif, par exemple entre environ 500 mg/l et environ 300 g/l.

Les sels d'ammonium que l'on peut mettre en œuvre selon le procédé de l'invention sont notamment ceux de formule $R_3N—CH_3^+Cl^-$ dans laquelle le radical hydrocarboné R a de 8 à 10 atomes de carbone. Ces produits sont notamment commercialisés sous les marques Adogen 464 et Aliquat 336.

Les alcools que l'on peut mettre en œuvre selon le procédé de l'invention sont ceux qui contiennent de préférence un nombre d'atomes de carbone compris entre environ 4 et environ 10 de manière qu'ils soient substantiellement non miscibles dans l'eau et suffisamment fluides pour éviter les problèmes de mise en œuvre. Parmi ceux-ci on peut utiliser par exemple : le pentanol, le n-butanol, l'isobutanol, le cyclohexanol, le n-hexanol 1, le 2-éthylhexanol, le n-heptanol, le n-octanol, l'isooctanol, le n-décanol et l'isodécanol. On utilise de préférence le 2-éthylhexanol pur c'est-à-dire non dilué.

La proportion en agent d'extraction dans la phase organique n'est pas critique et peut varier dans de larges limites. Toutefois, il est en général avantageux que celle-ci soit la plus élevée possible, par exemple au moins 35 % en volume rapporté à la phase organique.

Lorsque l'on utilise comme agent d'extraction des chlorures d'ammonium quaternaire, une proportion comprise entre environ 3 % et environ 30 % en volume rapportée à la phase organique conduit à des conditions hydrodynamiques de purification avantageuses.

Lorsque l'on utilise comme agent d'extraction des alcools et lorsque leur viscosité le permet, ceux-ci sont de préférence utilisés non dilués afin de maintenir les volumes de liquide et donc la taille des installations au minimum. Leur concentration peut varier de 10 à 100 % en volume.

La phase organique peut notamment contenir en outre ainsi qu'il est bien connu de l'homme de l'art, un diluant. Parmi les diluants habituellement mis en œuvre dans le domaine de l'extraction liquide-liquide, on peut citer les composés aromatiques comme par exemple, le benzène, le toluène, l'éthylbenzène, le xylène et les coupes du type Solvesso (marque déposée par la Société Exxon) et enfin les dérivés halogénés de ces composés comme, par exemple, le chloroforme et le tétrachlorure de carbone.

Après séparation de la phase organique de la phase aqueuse, on met en contact la phase organique avec une solution de lavage pour réaliser une opération de lavage sélectif de cette phase organique qui élimine les impuretés restantes.

Lorsque l'opération d'extraction a été réalisée à l'aide d'un chlorure d'ammonium quaternaire, la solution de lavage doit contenir entre environ 1 et environ 50 g/l de gallium et de préférence entre 3 et 10 g/l. On peut par exemple utiliser comme solution de lavage un mélange constitué d'une part, d'une solution d'acide chlorhydrique de concentration avantageusement comprise entre environ 7 et environ 12N et, d'autre part, d'une fraction de la solution aqueuse finale purifiée de chlorure de gallium.

Lorsque l'opération d'extraction a été réalisée avec l'aide d'un alcool, la solution de lavage peut être constituée par de l'eau ou par une solution d'acide chlorhydrique diluée.

La solution aqueuse de lavage obtenue qui contient les impuretés et un peu de gallium peut être éventuellement recyclée avec la solution aqueuse chlorhydrique initiale de gallium pour subir de nouveau les opérations de purification.

Puis, on opère le transfert du gallium purifié de la phase organique dans une solution aqueuse en contactant la phase organique avec de l'eau et enfin on sépare la phase organique de la phase aqueuse obtenue, la phase aqueuse contenant le chlorure de gallium pur.

La pureté de la solution aqueuse de gallium ainsi obtenue est supérieure à 99,99 %.

On sépare enfin la phase organique de la phase aqueuse. La phase aqueuse obtenue contient le gallium pur sous forme de chlorure de gallium d'une pureté supérieure à 99,99 %.

Les étapes d'extraction, de lavage sélectif et de récupération du gallium peuvent être mises en œuvre dans des dispositifs classiques utilisés dans les procédés d'extraction liquide-liquide. De tels dispositifs comprennent généralement plusieurs étapes de systèmes mélangeurs-décanteurs ou de colonnes garnies et/ou agitées, agencés pour réaliser les opérations d'extraction, de lavage sélectif et de récupération en phase aqueuse de l'élément extrait.

Les exemples qui vont suivre illustrent l'invention sans en limiter la portée.

Exemple 1

On opère la purification d'une solution (G) de chlorure de gallium ayant la composition suivante :

Ga : 40 g/l
HCl : 5,6 N
Al : 5 mg/l
Na : 3 mg/l
$Fe^{3+}$ : 800 mg/l
Ca : 10 mg/l
Mg : 2 mg/l
Cr : 1 mg/l
V : 1 mg/l
Cu : 0,4 mg/l
Mn : 1 mg/l
Zn : 2 mg/l

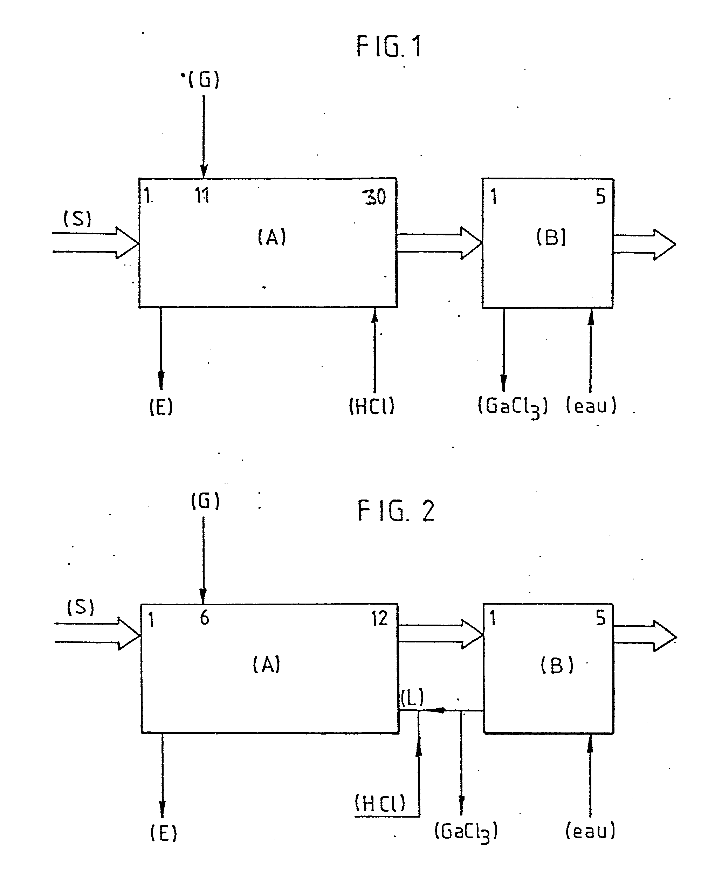

On met en contact celle-ci avec une phase organique constituée de 2-éthylhexanol (S.). Cette opération est réalisée selon le dispositif décrit à la figure 1 dans une batterie d'extraction liquide-liquide (A) fonctionnant à contre-courant et comprenant 30 étages théoriques. Le 2-éthylhexanol alimente la batterie à l'étage 1 avec un débit de 100 ml/h. La solution de gallium est introduite dans la batterie à l'étage 11 avec un débit de 145 ml/h. Le lavage sélectif est réalisé par introduction à l'étage 30 d'une solution d'acide chlorhydrique (HC1) 0,5N avec un débit de 45 ml/h.

La phase aqueuse épuisée (E) sortant de l'étage 1 contient les impuretés et moins de 100 mg/l de gallium, ce qui correspond à un taux d'extraction supérieur à 99,5 %.

Le 2-éthylhexanol chargé en gallium sortant de la batterie A alimente une batterie B de 5 étages dans laquelle on récupère le chlorure de gallium ($GaCl_3$) en solution aqueuse par mise en contact à contre-courant de (S), avec de l'eau (eau) avec un débit de 95 ml/h. On obtient une solution de $GaCl_3$ dont la composition est la suivante :

Ga : 59,6 g/l
Al < 0,2 mg/l
Na < 0,05 mg/l

Fe < 0,1 mg/l
Ca < 0,05 mg/l
Mg < 0,05 mg/l
Cr < 0,1 mg/l
Cu < 0,1 mg/l
Mn < 0,05 mg/l
Zn < 0,05 mg/l

La solution obtenue présente ainsi une pureté supérieure à 99,99 %.

Exemple 2

On se réfère dans cet exemple à la figure 2.

On opère la purification d'une solution (G) de chlorure de gallium ayant la composition suivante :

Ga : 53 g/l
HCl : 6 N
Al : 3 mg/l
Na : 25 mg/l
$Fe^{3+}$ : 650 mg/l
Ca : 1,5 mg/l
Mg : 1 mg/l
Cr : 0,6 mg/l
V : 0,2 mg/l
Cu : 0,4 mg/l
Mn : 0,4 mg/l
Zn : 1,6 mg/l
Pb : 0,1 mg/l

On met en contact cette solution (G) avec une phase organique (S) constituée de chlorure de tricapryllylméthyl ammonium (vendue sous la marque Aliquat 336 sous forme chlorure) en solution à 6 % dans le Solvesso 150 (marque déposée par la société Exxon).

Cette opération est réalisée dans une batterie d'extraction liquide-liquide (A) fonctionnant à contre-courant et comportant 12 étages théoriques. La phase organique (S) alimente la batterie à l'étage 1 avec un débit de 2 540 ml/h. La solution de gallium (G) est introduite dans la batterie à l'étage 6 avec un débit de 300 ml/h. Le lavage sélectif de la phase organique chargée est réalisé dans les étages 6 à 12 par une solution de lavage (L) décrite ci-après.

La phase organique sortant de A contenant le gallium purifié alimente alors la batterie B de 5 étages théoriques à l'étage 1 dans laquelle il est réextrait par de l'eau entrant à l'étage 5 avec un débit de 1 270 ml/h sous forme d'une solution de chlorure de gallium à 14 g/l de Ga.

635 ml/h de cette solution sont prélevés et constituent la production tandis que 635 ml/h sont joints à 635 ml/h d'HCl 12M pour constituer la solution de lavage L qui alimente alors la batterie A à l'étage 12.

La solution épuisée E contient les impuretés et moins de 50 mg/l de Ga, c'est-à-dire que l'on a extrait plus de 99 % du gallium.

La solution de gallium purifié a la composition suivante :

Ga < 14 g/l
Al < 0,2 mg/l
Na < 0,05 mg/l
Fe < 0,1 mg/l
Ca < 0,05 mg/l
Mg < 0,05 mg/l
Cr < 0,1 mg/l
V < 0,05 mg/l
Cu < 0,1 mg/l
Mn < 0,05 mg/l
Zn < 0,05 mg/l
Pb < 0,05 mg/l

ce qui correspond pour le gallium à une pureté supérieure à 99,99 %.

**Revendications**

1. Procédé de purification d'une solution aqueuse chlorhydrique de gallium contenant entre autres du fer ferrique par extraction liquide-liquide à l'aide d'un agent d'extraction caractérisé en ce que :

— on met en contact la solution aqueuse chlorhydrique de gallium ayant une acidité libre comprise entre 1 et 8N avec une phase organique contenant un agent d'extraction choisi parmi les chlorures d'ammonium quaternaire et les alcools ayant au maximum 10 atomes de carbone,

— on sépare la phase organique obtenue contenant le gallium et l'agent d'extraction de la phase aqueuse contenant les impuretés,

— on réalise une opération de lavage de la phase organique séparée pour éliminer les impuretés restantes qui est conduite (i) à l'aide d'une solution chlorhydrique de gallium présentant une acidité comprise entre 5 et 8N lorsque l'agent d'extraction est un chlorure d'ammonium quaternaire et (ii) à l'aide de l'eau ou d'une solution d'acide chlorhydrique inférieure à 6N lorsque l'agent d'extraction est un alcool,

— on transfère le gallium de la phase organique obtenue dans une phase aqueuse par mise en contact de la phase organique avec de l'eau,

— on récupère par séparation la phase aqueuse contenant le chlorure de gallium purifié.

2. Procédé selon la revendication 1 caractérisé en ce que l'acidité libre de la solution aqueuse chlorhydrique de gallium est comprise entre 2 et 6N.

3. Procédé selon l'une des revendications 1 et 2 caractérisé en ce que le chlorure d'ammonium quaternaire a pour formule $R_3N\ CH_3^+$, $Cl^-$ dans laquelle le radical hydrocarboné R a de 8 à 10 atomes de carbone.

4. Procédé selon l'une des revendications 1 et 2 caractérisé en ce que l'alcool mis en œuvre contient un nombre d'atomes de carbone compris entre 4 et 10.

5. Procédé selon la revendication 4 caractérisé en ce que l'alcool est choisi parmi le groupe comprenant : le pentanol, le n-butanol, l'isobutanol, le cyclohexanol, le n-hexanol, le 2-éthylhexanol, le n-heptanol, le n-octanol, l'isooctanol, le n-décanol, l'isodécanol.

6. Procédé selon l'une quelconque des revendications 1 à 5 caractérisé en ce que la proportion de l'agent d'extraction dans la phase organique est d'au moins 3 % en volume rapporté à la phase organique.

7. Procédé selon l'une quelconque des revendications 1 à 3 ou 6 caractérisé en ce que la proportion de chlorure d'ammonium quaternaire dans la phase organique est comprise entre 3 et 30 % en volume rapporté à la phase organique.

8. Procédé selon l'une quelconque des revendications 1, 2, 4, 5, 6, caractérisé en ce que la proportion d'alcool dans la phase organique est comprise entre 10 et 100 % en volume rapporté à la phase organique.

9. Procédé selon l'une quelconque des revendications 1 à 3, 6, 7, caractérisé en ce que la solution aqueuse de lavage de la phase organique contenant le gallium extrait par le chlorure d'ammonium quaternaire est une solution chlorhydrique de gallium contenant entre 1 et 50 g/l de gallium.

10. Procédé selon la revendication 9 caractérisé en ce que la solution chlorhydrique de gallium contient entre 3 et 10 g/l de gallium.

11. Procédé selon la revendication 9 ou 10 caractérisé en ce que la solution aqueuse de lavage est constituée d'un mélange d'une part, d'une solution d'acide chlorhydrique de concentration comprise entre environ 7 et environ 12N et, d'autre part, d'une fraction de la solution aqueuse finale purifiée de chlorure de gallium.

**Claims**

1. Process for the purification of an aqueous gallium hydrochloride solution containing iron-III inter alia, by liquid-liquid extraction using an extracting agent, characterised in that :

— the aqueous gallium hydrochloride solution having a free acidity of between 1 and 8N is brought into contact with an organic phase containing an extraction agent chosen from amongst quaternary ammonium chlorides and alcohols having at most 10 carbon atoms,

— the organic phase obtained, containing the gallium and the extracting agent, is separated from the aqueous phase containing the impurities,

— the separated-off organic phase is subjected to a washing operation to remove the residual impurities, the operation being carried out (i) with a gallium hydrochloride solution having an acidity of between 5 and 8N if the extracting agent is a quaternary ammonium chloride and (ii) with water or a hydrochloric acid solution of less than 6N if the extracting agent is alcohol,

— the gallium is transferred from the organic phase obtained into an aqueous phase by bringing the organic phase into contact with water, and

— the aqueous phase containing the purified gallium chloride is recovered by separating it off.

2. Process according to Claim 1, characterised in that the free acidity of the aqueous gallium hydrochloride solution is between 2 and 6N.

3. Process according to either of Claims 1 and 2, characterised in that the quaternary ammonium chloride has the formula $R_3NCH_3^+,Cl^-$, in which the hydrocarbon radical R has from 8 to 10 carbon atoms.

4. Process according to either of Claims 1 and 2, characterised in that the alcohol employed contains between 4 and 10 carbon atoms.

5. Process according to Claim 4, characterised in that the alcohol is chosen from among the group comprising pentanol, n-butanol, isobutanol, cyclohexanol, n-hexanol, 2-ethylhexanol, n-heptanol, n-octanol, isooctanol, n-decanol and isodecanol.

6. Process according to any one of Claims 1 to 5, characterised in that the proportion of extracting agent in the organic phase is at least 3 % by volume relative to the organic phase.

7. Process according to any one of Claims 1 to 3 or 6, characterised in that the proportion of quaternary ammonium chloride in the organic phase is between 3 and 30 % by volume relative to the organic phase.

8. Process according to any one of Claims 1, 2, 4, 5 and 6, characterised in that the proportion of alcohol in the organic phase is between 10 and 100 % by volume relative to the organic phase.

9. Process according to any one of Claims 1 to 3, 6 and 7, characterised in that the aqueous solution which is used to wash the organic phase containing the gallium extracted by the quaternary ammonium chloride is a gallium hydrochloride solution containing between 1 and 50 g/l of gallium.

10. Process according to Claim 9, characterised in that the gallium hydrochloride solution contains between 3 and 10 g/l of gallium.

11. Process according to Claim 9 or 10, characterised in that the aqueous wash solution consists of a mixture of, on the one hand, a hydrochloric acid solution of concentration between about 7 and about 12N and, on the other hand, a fraction of the final purified aqueous solution of gallium chloride.

**Ansprüche**

1. Verfahren zur Reinigung einer wässrigen salzsauren Galliumlösung, die u. a. Eisen(III) enthält, durch Flüssig-Flüssig-Extraktion mit Hilfe eines Extraktionsmittels, dadurch gekennzeichnet,

— daß man die wässrige salzsaure Galliumlösung mit einem Gehalt an freier Säure von 1 bis 8N mit einer organischen Phase in Berührung bringt, die ein Extraktionsmittel enthält, das unter den quaternären Ammoniumchloriden und den Alkoholen mit höchstens 10 Kohlenstoffatomen gewählt wird,

— daß man die erhaltene organische Phase, die das Gallium und das Extraktionsmittel enthält, von der wässrigen, die Verunreinigungen enthaltenden Phase trennt,

— daß man zur Entfernung der restlichen Verunreinigungen die getrennte organische Phase einem Waschvorgang unterwirft, der (i) mit Hilfe einer salzsauren Galliumlösung mit einer Azidität von 5 bis 8N durchgeführt wird, wenn das Extraktionsmittel ein quaternäres Ammoniumchlorid ist, und der (ii) mit Hilfe von Wasser oder einer Salzsäurelösung unter 6N durchgeführt wird, wenn das Extraktionsmittel ein Alkohol ist,

— daß man das Gallium aus der erhaltenen organischen Phase in eine wässrige Phase überführt, indem man die organische Phase mit Wasser in Berührung bringt,

— daß man durch Abtrennen die wässrige Phase mit dem gereinigten Galliumchlorid gewinnt.

2. Verfahren nach Anspruch 1, dadurch gekennzeichnet, daß die freie Säure der wässrigen salzsauren Galliumlösung zwischen 2 und 6N beträgt.

3. Verfahren nach Anspruch 1 oder 2, dadurch gekennzeichnet, daß das quaternäre Ammoniumchlorid die Formel $R_3NCH_3^+,Cl^-$ hat, in der der Kohlenwasserstoffrest R 8 bis 10 Kohlenstoffatome aufweist.

4. Verfahren nach Anspruch 1 oder 2, dadurch gekennzeichnet, daß der verwendete Alkohol 4 bis 10 Kohlenstoffatome hat.

5. Verfahren nach Anspruch 4, dadurch gekennzeichnet, daß der Alkohol aus der Gruppe von Pentanol, n-Butanol, Isobutanol, Cyclohexanol, n-Hexanol, 2-Äthylhexanol, n-Heptanol, n-Octanol, Isooctanol, n-Decanol und Isodecanol gewält wird.

6. Verfahren nach einem der Ansprüche 1 bis 5, dadurch gekennzeichnet, daß der Anteil des Extraktionsmittels in der organischen Phase mindestens 3 Vol.%, bezogen auf die organische Phase, beträgt.

7. Verfahren nach einem der Ansprüche 1 bis 3 oder 6, dadurch gekennzeichnet, daß der Anteil an quaternärem Ammoniumchlorid in der organischen Phase zwischen 3 und 30 Vol.%, bezogen auf die organische Phase, beträgt.

8. Verfahren nach einem der Ansprüche 1, 2, 4, 5 oder 6, dadurch gekennzeichnet, daß der Anteil des Alkohols in der organischen Phase zwischen 10 und 100 Vol.%, bezogen auf die organische Phase, beträgt.

9. Verfahren nach einem der Ansprüche 1 bis 3, 6 oder 7, dadurch gekennzeichnet, daß die wässrige Lösung zum Waschen der organischen Phase mit dem durch das quaternäre Ammoniumchlorid extrahierten Gallium eine salzsaure Galliumlösung ist, die 1 bis 50 g Gallium/l enthält.

10. Verfahren nach Anspruch 9, dadurch gekennzeichnet, daß die salzsaure Galliumlösung 3 bis 10 g Gallium/l enthält.

11. Verfahren nach Anspruch 9 oder 10, dadurch gekennzeichnet, daß die wässrige Waschlösung aus einem Gemisch aus einer Chlorwasserstoffsäurelösung mit einer Konzentration zwischen etwa 7 und etwa 12N einerseits und einem Anteil der am Ende erhaltenen gereinigten wässrigen Galliumchloridlösung andererseits besteht.

## FIG. 1

## FIG. 2